Europäisches Patentamt

European Patent Office

Office européen des brevets

(19)

(11) Numéro de publication : **0 068 960**
**B1**

# (12)  FASCICULE DE BREVET EUROPÉEN

(45) Date de publication du fascicule du brevet :
21.11.85

(21) Numéro de dépôt : 82401067.2

(22) Date de dépôt : 11.06.82

(51) Int. Cl.⁴ : **B 60 N   1/06**

(54) Assemblage d'articulations pour sièges de véhicule.

(30) Priorité : 11.06.81 FR 8111510

(43) Date de publication de la demande :
05.01.83 Bulletin 83/01

(45) Mention de la délivrance du brevet :
21.11.85 Bulletin 85/47

(84) Etats contractants désignés :
BE DE GB IT NL SE

(56) Documents cités :
FR-A- 2 139 046
FR-A- 2 305 633
US-A- 4 133 578

(73) Titulaire : CYCLES PEUGEOT Société dite:
Beaulieu
F-25700 Valentigney (FR)

(72) Inventeur : Fourrey, François
Rue du Petit Chênois
F-25200 Montbeliard (FR)

(74) Mandataire : Polus, Camille et al
c/o Cabinet Lavoix 2, Place d'Estienne d'Orves
F-75441 Paris Cedex 09 (FR)

Jouve, 18, rue St-Denis, 75001 Paris, France

## Description

De plus en plus souvent les sièges d'automobiles comportent un dossier susceptible d'être incliné, soit vers l'arrière, soit vers l'avant, par rapport à l'assise du siège, grâce à une articulation. Des types nombreux et variés d'articulations sont actuellement utilisés dans ce but.

D'une façon générale cependant, chaque articulation comporte deux flasques fixés respectivement au dossier et à l'assise du siège, comportant des portions circulaires traversées axialement par l'axe de pivotement de l'articulation et mobiles l'un par rapport à l'autre, parallèlement à eux-mêmes, autour de cet axe, des organes de démultiplication et/ou de blocage étant montés entre ces parties circulaires des deux flasques.

Il est donc nécessaire que ces flasques soient maintenus axialement dans des positions bien déterminées, avec une force suffisante pour éviter leur séparation, même sous l'effet de chocs ou de secousses, et cependant qu'ils puissent aisément pivoter l'un par rapport à l'autre pour permettre le réglage de la position du dossier.

Or les éléments constitutifs des articulations de siège de véhicule sont habituellement fixés les uns sur les autres par l'intermédiaire d'organes rapportés, fixés sur les flasques par l'intermédiaire de rivets, soudure, sertissage, ou analogue, ce qui suppose une opération particulière et accroît le coût de l'articulation.

Il a été proposé (FR-A-2 305 633) de pratiquer sur chacun des flasques au moins un crevé embouti, formant une patte parallèle au flasque, puis de faire glisser les flasques l'un sur l'autre pour que la partie circulaire de chacun d'eux se place sous la ou les pattes de l'autre, la mise en place de l'axe les maintenant ensuite l'un contre l'autre.

Toutefois, les crevés devant obligatoirement être découpés à une certaine distance du bord des flasques, l'amplitude du pivotement se trouve limitée. En outre, les crevés réduisent la résistance de l'ensemble.

La présente invention a pour but de permettre de réaliser de telles articulations, ne nécessitant pas de pièces supplémentaires d'assemblage, qui présentent cependant d'excellentes qualités de résistance avec une grande liberté de pivotement.

Par rapport au FR-A-2 305 633 qui décrit déjà un assemblage entre les éléments d'une articulation de siège de véhicule automobile, ou analogue, comportant deux flasques de fixation respectivement au dossier et à l'assise du siège, ayant des parties circulaires qui sont traversées axialement par l'axe de pivotement de l'articulation mais peuvent pivoter l'une par rapport à l'autre, parallèlement à elles-mêmes, autour de cet axe, l'invention est caractérisée en ce que chaque flasque est prolongé, au voisinage de sa partie circulaire, par au moins une patte latérale, qui a été rabattue perpendiculairement au plan général du flasque, préalablement au montage des flasques sur l'axe de pivotement, et dont l'extrémité libre est ensuite repliée latéralement derrière l'autre flasque, après leur montage sur l'axe, pour assurer l'assemblage.

De préférence, chaque flasque comporte deux pattes situées à proximité de la périphérie de la partie circulaire du flasque correspondant.

Les pattes étant d'une seule pièce avec le flasque qui les porte assurent un maintien axial très résistant des deux flasques l'un par rapport à l'autre, et bien entendu de tous les organes placés entre eux. Les pattes réparties sur la périphérie des parties circulaires servent en outre de guides pour le pivotement relatif des deux flasques et même de butées de limitation de ce pivotement. Elles sont ainsi extrêmement efficaces tout en étant peu coûteuses à réaliser.

La description ci-dessous d'un mode de réalisation donné à titre d'exemple non limitatif, et représenté aux dessins annexés, fera d'ailleurs ressortir les avantages et caractéristiques de l'invention.

Sur ces dessins :

la figure 1 est une vue en perspective d'une articulation selon l'invention ;

les figures 2 à 4 montrent, en plan, les étapes successives de la formation des pattes d'un flasque ;

la figure 5 est une vue de côté du flasque de la figure 4.

L'articulation représentée comporte, de la manière habituelle, deux flasques 1 et 2 fixés respectivement sur l'armature 4 du dossier du siège et sur l'armature 6 de l'assise de ce même siège. Chacun des flasques 1 et 2 comporte une portion circulaire, respectivement 8 et 10, qui est traversée axialement par l'axe 12 de pivotement de l'articulation. Les deux portions circulaires 8 et 10 ont le même diamètre extérieur et sont ainsi exactement superposées axialement le long de l'axe 12. Elles comportent de préférence chacune une denture interne, non représentée, et des organes de démultiplication et/ou de blocage sont montés entre ces dentures.

L'axe 12 n'est pas solidaire du flasque mobile 1 fixé sur le dossier 4, mais commande des pignons internes assurant l'inclinaison du dossier. Ces pignons n'ont pas été représentés pour ne pas compliquer les dessins et peuvent, par exemple, constituer un train de réduction épicycloïdal.

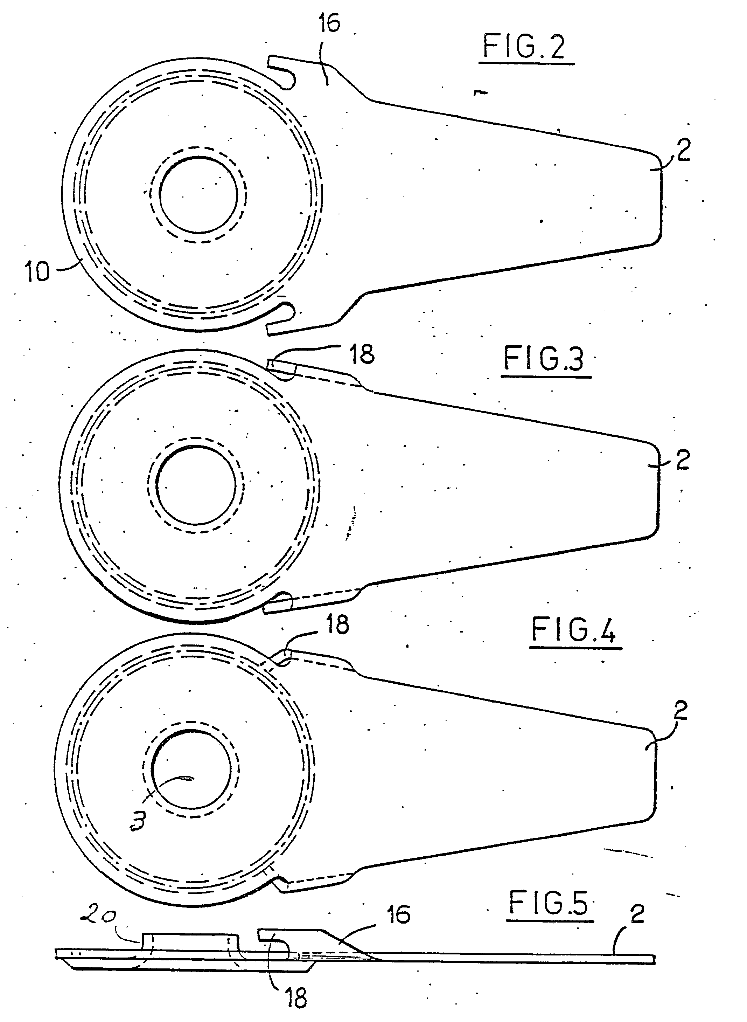

Chacun des flasques 1 et 2 comporte, à proximité de sa partie circulaire 8 ou 10, deux pattes 14, 16, qui ont été découpées latéralement dans la matière même du flasque (fig. 2) puis rabattues perpendiculairement au plan général de ce flasque. Chaque patte 14, 16 est prolongée par un doigt 18 qui est dirigé vers la partie circulaire correspondante 8 ou 10 mais qui, même en position rabattue, ne rejoint pas encore cette partie circulaire (fig. 3). Lorsque tous les organes de l'articulation sont en place et que les flasques 1 et 2 sont montés sur l'axe de pivotement et rapprochés l'un de l'autre, entre leurs doigts 18, chacun des doigts 18 est ensuite replié en direction de l'axe 12 et forme ainsi une butée d'appui du dos de la partie circulaire 8 ou 10 du flasque opposé.

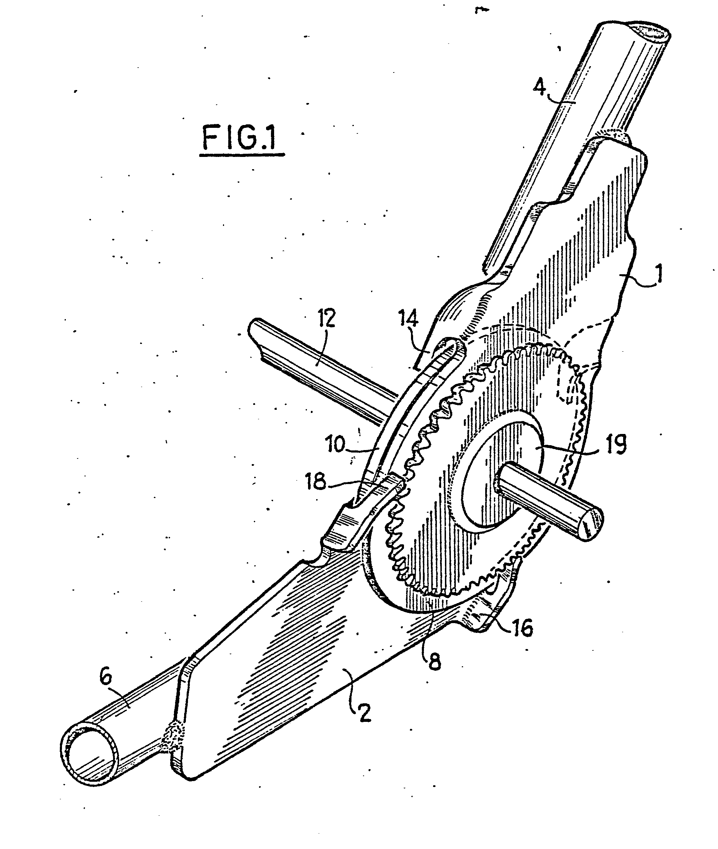

Les pattes 14 et 16 des deux flasques étant rabattues en direction opposée, tandis que les doigts 18 de chaque paire de pattes 14 ou 16 sont repliés l'un vers l'autre et répartis sur la circonférence des portions circulaires 8 et 10, l'assemblage présente une résistance extrêmement importante aux chocs, secousses et autres efforts tendant à détériorer l'articulation. Par contre l'espace entre chaque doigt 18 et la racine de la patte 14 ou 16 à laquelle il appartient est suffisant pour permettre le passage de la partie circulaire opposée sans bloquer celle-ci et en lui laissant la possibilité de pivoter autour de l'axe 12. Ainsi le flasque 1 solidaire du dossier 4 peut pivoter en sens contraire des aiguilles d'une montre, en regardant la figure 1, de façon à rapprocher le siège 4 de l'assise 6, ou inversement, pour redresser le dossier en l'écartant de cette assise. Dans tous les cas la partie circulaire 8 de ce flasque 1, qui pivote par rapport à la partie circulaire 10 du flasque 2, est guidée par les pattes 16 et même par les pattes 14.

A la limite les pattes 14 du flasque 1 viennent buter contre les pattes 16 du flasque 2, qui limite ainsi le déplacement du dossier.

Selon le mode de réalisation représenté sur les Fig. 2 à 5, le flasque 2 forme autour du trou 3 de passage de l'axe de pivotement 12, un canon 20 qui est susceptible de s'emboîter dans le trou correspondant du flasque 1. Les parties circulaires 8, 10 des deux flasques sont ainsi facilement centrées l'une sur l'autre avant d'être assemblées par le repliement des doigts 18, le montage de l'axe 12 pouvant être effectué ultérieurement.

On obtient donc une articulation qui dispose de la liberté de mouvement désirée tout en présentant une résistance améliorée et en supprimant l'obligation de monter des pièces rapportées au cours de la mise en place des organes de l'articulation.

**Revendications**

1. Assemblage entre les éléments d'une articulation de siège de véhicule automobile, ou analogue, comportant deux flasques (1, 2) de fixation respectivement au dossier et à l'assise du siège, ayant des parties circulaires (8, 10) qui sont traversées axialement par l'axe (12) de pivotement de l'articulation mais peuvent pivoter l'une par rapport à l'autre, parallèlement à elles-mêmes, autour de cet axe, caractérisé en ce que chaque flasque (1, 2) est prolongé, au voisinage de sa partie circulaire (8, 10), par au moins une patte (14, 16) latérale, qui a été rabattue perpendiculairement au plan général du flasque préalablement au montage des flasques sur l'axe de pivotement (12), et dont l'extrémité libre (18) est ensuite repliée latéralement derrière l'autre flasque après leur montage sur l'axe, pour assurer l'assemblage.

2. Assemblage suivant la revendication 1, caractérisé en ce que chaque flasque comporte deux pattes (14, 16) situées à proximité de la périphérie de la partie circulaire (8, 10) du flasque correspondant.

3. Assemblage suivant l'une des revendications 1 et 2, caractérisé en ce que l'extrémité libre de chaque patte est constituée par un doigt (18) dirigé vers la partie circulaire (8, 10) correspondante, avant l'assemblage des flasques.

4. Assemblage suivant la revendication 3, caractérisé en ce que les doigts (18) sont repliés vers l'intérieur en direction de l'axe de pivotement (12), après l'assemblage des flasques.

**Claims**

1. An assembly between the elements of a motor vehicle seat pivot or the like, comprising two side walls (1, 2) for fixing to the back rest and the seat of the seat structure, having circular portions (8, 10) through which axially extends the pivot shaft (12) of the pivot but capable of pivoting relative to each other while remaining parallel to themselves, about said shaft, characterized in that each side wall (1, 2) is extended, in the vicinity of its circular portion (8, 10) by at least one lateral tab (14, 16) which has been bent over to be perpendicular to the general plane of the side wall prior to the mounting of the side walls on the pivot shaft (12), the free end (18) thereof being thereafter bent laterally behind the other side wall after their mounting on the shaft so as to achieve their assembly.

2. An assembly according to claim 1, characterized in that each side wall has two tabs (14, 16) located in the vicinity of the periphery of the circular portion (8, 10) of the corresponding side wall.

3. An assembly according to one of the claims 1 and 2, characterized in that the free end of each tab is constituted by a finger portion (18) extending toward the corresponding circular portion (8, 10) before the assembly of the side walls.

4. An assembly according to claim 3, characterized in that the finger portions (18) are bent inwardly toward the pivot shaft (12) after the assembly of the side walls.

**Patentansprüche**

1. Anordnung zwischen den Elementen eines Gelenks am Sitz eines Kraftfahrzeugs oder dergleichen, mit zwei Flanschen (1, 2) zur Befestigung jeweils an der Rücklehne und an der Sitzfläche, wobei die Flansche kreisförmige Bereiche (8, 10) aufweisen, durch welche in axialer Richtung die Drehachse (12) des Gelenks hindurchgeht, die kreisförmigen Bereiche selbst jedoch parallel zueinander um diese Achse drehbar sind, dadurch gekennzeichnet, daß die flansche (1, 2) jeweils in der Nähe ihrer kreisförmigen Bereiche (8, 10) durch einen seitlichen Fortssatz (14, 16) verlängert sind, welcher senkrecht zur allgemeinen Ebene des Flansches vor deren Aufbringung auf die Drehachse (12) umgeschlagen und dessen freies Ende (18) im Anschluß hieran seitlich hinter den anderen Flansch nach deren Aufbringung auf die Achse zur Arretierung der Anordnung zurückgeschlagen wird.

2. Anordnung nach Anspruch 1, dadurch gekennzeichnet, daß jeder Flansch zwei Fortsätze (14, 16) in der Nähe des Umfangs des kreisförmigen Bereichs (8, 10) des entsprechenden Flansches aufweist.

3. Anordnung nach einem der Ansprüche 1 und 2, dadurch gekennzeichnet, daß jeweils das freie Ende der Fortsätze einen Finger (18) aufweist, welcher sich vor der Montage der Flansche in Richtung auf den entsprechenden kreisförmigen Bereich (8, 10) erstreckt.

4. Anordnung nach Anspruch 3, dadurch gekennzeichnet, daß die Finger (18) nach der Montage der Flansche nach innen in Richtung auf die Drehachse (12) umgebogen werden.

FIG.1

FIG.2

FIG.3

FIG.4

FIG.5